(19) Europäisches Patentamt
European Patent Office
Office européen des brevets

(11) **EP 4 047 359 A1**

(12) **EUROPEAN PATENT APPLICATION**

(43) Date of publication:
    **24.08.2022 Bulletin 2022/34**

(21) Application number: **21158430.5**

(22) Date of filing: **22.02.2021**

(51) International Patent Classification (IPC):
    ***G01N 27/30*** (2006.01)    ***H01L 21/02*** (2006.01)

(52) Cooperative Patent Classification (CPC):
    **G01N 27/30**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Meilleur Temps
    2000 Neuchâtel (CH)**

(72) Inventor: **Guy, SEMON
    2000 Neuchâtel (CH)**

(74) Representative: **IP Trust
    2, rue de Clichy
    75009 Paris (FR)**

(54) **ELECTRODE FOR AN ELECTROCHEMICAL SENSOR**

(57)     The invention concerns an electrode for an electrochemical sensor used in detecting the presence of one or more molecules of interest in a media:
- Wherein the electrode contains a three-dimensional (3D) nanostructure,
- Wherein the 3D nanostructure forms a rigid structure with more than one layer of superimposed partial infiltration coatings to avoid the structural deformation of the 3D nanostructure by preventing the structure conglomeration in the media.

    The invention also concerns a method for fabricating such an electrode.

Figure 1

**Description**

Technical field

The present invention relates to electrodes, and more particularly, to electrodes for an electrochemical sensor realized in nanostructure.

Background

US20060096870 describes an apparatus uses carbon nanotubes for electrochemical analysis of biological molecules of interest. Especially, the carbon nanotubes are vertical-aligned multi-walled carbon nanotubes.

This method has the following problem: the nanostructure undergoes a structural deformation because the nanotubes conglomerate in the media of liquid or gas. The conglomeration decreases the surface for the detection, thus reduce the sensitivity of the sensor.

Advantages of the invention

The present disclosure has been developed in response to the present state of the art, and in particular, in response to the problems and needs in the art that have not yet been fully solved by electrodes currently available. Compared to the state of the art, the present invention has the following advantage: the internal nanotubes of the nanostructure are rigid to avoid the structural deformation caused by the conglomeration. In addition, the surface areas are further increased by superimposing nanostructures, which gives a higher sensitivity, since a larger surface area means more interfacing with the medium and a greater surface reactivity.

Brief summary of the invention

The present invention concerns an electrode for an electrochemical sensor used in detecting the presence of one or more molecules of interest in a media. The electrode contains a three-dimensional (3D) nanostructure, which forms a rigid structure with more than one layer of superimposed partial infiltration coatings to avoid the structural deformation of the 3D nanostructure by preventing the structure conglomeration in the media.

The invention concerns a plurality of variations of the electrode, which include the following modes of realization either alone or in combination.

- the 3D nanostructure has a surface area per volume of at least 50 $m^2/cm^3$ by the superimposed multi-layers of partial infiltration coatings.
- the 3D nanostructure is made from a matrix of nanotubes or nanorods realized in the material among carbon, boron nitride, silicon ;
- the 3D nanostructure is made from a vertically aligned carbon nanotubes arrays (VANTAs);

- the partial infiltration coating is realized by infiltrating the 3D nanostructure with a material selected among metal oxides (TiO2), ceramics (Si), polymers, metals (Ni), other allotropic forms of carbon;
- 4% - 80% of the nanostructure's total internal volume is filled with infiltration coating;
- the 3D nanostructure has a controllable porosity by controlling the diameter of the nanotubes/nanorobes, the pitch between the nanotubes/nanorobes, the thickness of the infiltration coatings;
- the nanostructure is grown directly and fixed permanently on the surface of a chip;
- the nanostructure is fixed onto the surface of a chip by a technique selected from chemical bonding, vacuum disposition, origamic pop-up folding;
- the target molecules are proteins, disease marker, aroma compounds, explosive pollutants, glucose, alcohols or ions.

The present invention concerns also an electrochemical sensor comprising a multiply of the above-mentioned electrodes. The electrochemical sensor comprises a potentiometer, an amperemeter, or an electrochemical impedance spectroscopy.

The present invention concerns also an electrochemical method for detecting the presence of one or more molecules of interest in a media, and the method uses the above-mentioned electrochemical sensor.

The present invention concerns a method for fabricating an electrode comprises the following steps:

- Generating a nanomatrix of nanotubes or nanorods realized in the material among carbon, boron nitride, silicon;
- Superimposing multi-layers of partial infiltration coatings by partially infiltrating the nanomatrix of nanotubes or nanorods with materials selected among ceramics (Si), especially metal oxides (TiO2), polymers, metals (Ni), other allotropic forms of carbon,
- Removing the nanomatrix of nanotubes or nanorods.

The present invention concerns also a method according to the precedent method, wherein a part of the superimposed multi-layers as sacrificial layers are removed, the remaining layers constitute the structural material of the electrode.

Brief description of the drawings

FIG.1 shows an infiltration process;
FIG.2a shows a two layers nested nanostructure with the top etched to expose the inner pores;
FIG.2b is an enlarge view of a region marked by the doted lines in the figure 2a;
FIG.3 is a diagram of a voltammetry to detect analytes;

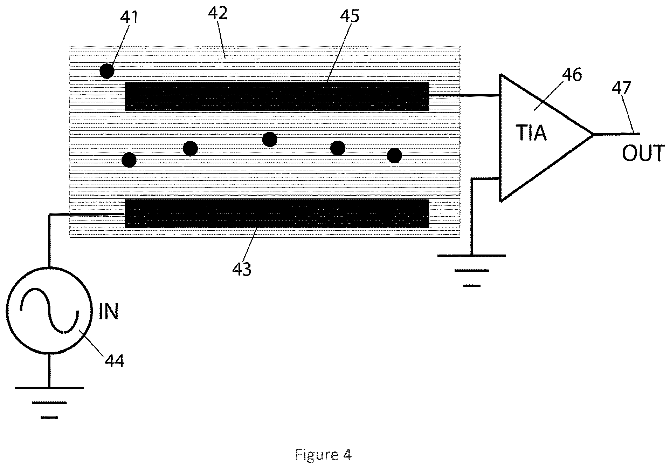

FIG.4 is a diagram of electrochemical impedance spectroscopy (EIS) to detect analytes.

## Detailed description of the preferred embodiment

It is to be understood that both the foregoing general description and the following detailed description are illustrative and explanatory, and are not restrictive. The section headings used herein are for organizational purposes and are not to be construed as limiting the subject matter described.

## General review of the Electrochemical sensors

Electrochemical sensors broadly are any sensors that transform chemical information (usually concentrations of analytes) into useful signals (generally electrical). These sensors can be used both in liquid and gas environments. Because effective electrochemical cells cannot be set up in a gas environment, gas sensors use either a liquid or solid electrochemical cell designed to allow gas species from the gas to diffuse into the cell electrolyte. When the target analyte is an ion, electrodes can generally measure its concentration directly by driving a chemical reaction in which it is involved. When the analyte is not an ion, some form of functionalization must be used on the working electrode. This can take various forms. For example, with glucose sensors, an enzyme is used to break glucose down into an ionic analyte that can be measured electrochemically. Another method is the chemical absorption of species onto bonding cites which changes the interaction between the electrode and electrolyte. These bonding cites can be made with various forms of chemical functionalization including proteins, antibodies, and even phages. Phages appear to have some interesting advantages in biological applications including being more stable that other antibodies and proteins that could be used. There are various methods of preforming the electrochemical measurement that include voltammetry, amperometry, potentiometry, impedometry, and conductometry. Each has different advantages, especially, the impedometry is rapidly becoming more popular. One of biggest potential downsides of impedometry is more complex electronics, but in the modern world, complex electronics can be easily and inexpensively added to a product.

In order to augment the sensitivity of the electrochemical sensors, it is preferable that the electrode has large surface area per volume. The nanostructure based on three-dimensional nanostructure is a good candidate as described in the document US20060096870.

## Synthesis of Nanostructure

The document US20060096870 describes the morphology and electrochemical characteristics of a nanostructure made of well-aligned multi-wall carbon nanotubes.

Based on this nanostructure, the present invention aims to propose improvements, which can provide better characteristics.

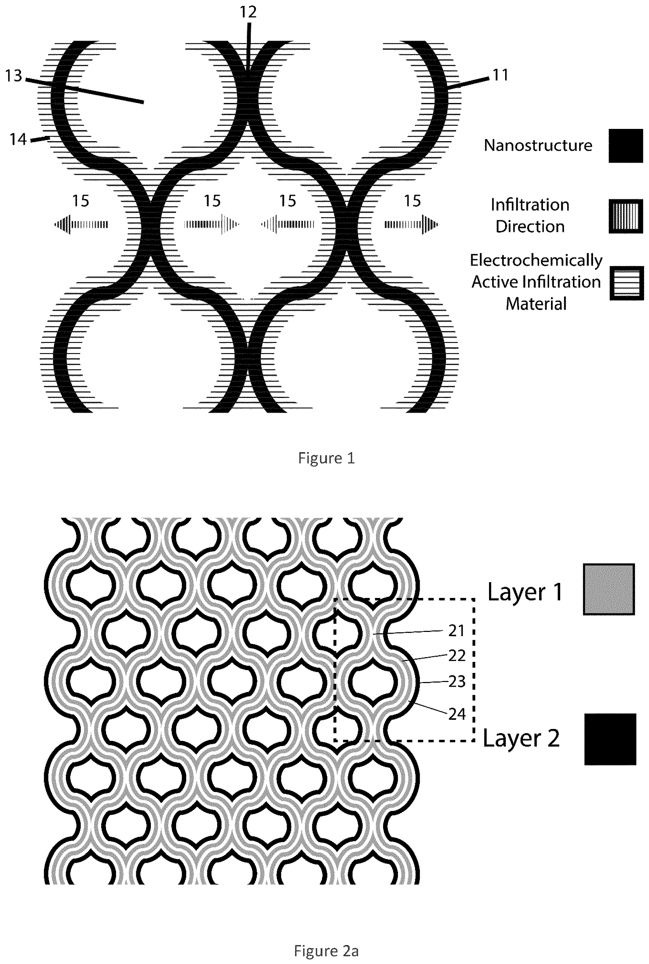

The figure 1 illustrates an infiltration process of a nanostructure in a cross-sectional view. The nanostructure is made of a matrix of well-aligned nanotubes, with the wavy shape columns representing a small part of the nanotube matrix. Each nanotube continues in both upper and lower directions and repeats the pattern until reaches a height between about 1 to 10,000 micrometers. The adjacent nanotubes touch each other at the crossing point 12. The resulted three-dimensional matrix of nanotubes is like a forest with the branches of trees crossing each other. The nanotubes form a nanoporous scaffold, which presents about 95% free space in the volume of the nanostructure.

An infiltration process is carried out to coat the sides walls of the nanotubes. The arrows 15 in the figure 1 indicate the infiltration direction. As the infiltration process continues, the surface of the nanotubes is coated with more and more infiltrated material.

As illustrated in the figure 1, the nanostructure 11 is in the form of a 3D nanostructure, which comprises matrices of carbon nanotubes as a scaffold supporting the whole structure. The nanostructure is partially infiltrated with the infiltration material 14 to coat the sides walls of the nanotubes. Partial infiltration means that the free space between the walls of the nanotubes is not fully filled so that the empty space 13 between the walls still exposes a large porosity, whose value depends on the thickness of the infiltration coating 14. The infiltrated material locks/freezes the matrices of nanotubes to form a rigid solid structure. When the partially infiltrated nanostructure is put inside the medium of gas or liquid, the structure conglomeration is eliminated because of the rigidity, thus the deformation of the nanotubes is avoided.

The partial infiltration coats the inner and outer side walls of the nanotubes scaffold and fulfills the free space between the interior side walls of the nanostructure. As far as 4% - 80% of the nanostructure's total internal volume is filled with infiltration coating, the nanostructure is rigid enough to be treated physically.

For partial infiltration, a variety of materials can be used, including silicon, polymers, or amorphous carbon. The main criterion for the infiltration material is that it must be able to cover the nanotubes to get rigid structure and to have desirable surface properties or be able to be surface functionalized.

After the partial infiltration, the nanostructure can be physically removed from the fabrication substrate and be implanted onto the ultimate device, because of its rigidity. Optionally, one external surface of the nanostructure can be treated to form a solid base. This base can be realized by atom layer deposition or other methods. By using hand tools or plasma flow, the fabricated nanostructure is detached from its manufacturing support and is ready to be used as an electrode.

As mentioned before, when the analyte is not an ion, some form of functionalization must be applied on the electrode. Depending on the infiltration material, the infiltration process can influence the physico-chemical nature of the nanostructure to enable certain functionality of the surface. It is also possible to apply other treatments or coatings that can change the chemical properties of the surface. The functionalization process can be realized but not limited to:

- Acid/base treatment
- Ozone treatment
- Plasma Treatment
- Attaching biomolecules
- Attaching other chemical compounds
- Annealing
- Thin material coating
- Some combination of the above.

In another embodiment, the carbon nanotubes inside the partial infiltrated nanostructure can be burned out using oxygen or water at high temperature (>500 C for $O_2$, >700 C for $H_2O$). After the burning out process, the carbon nanotubes as the scaffold of the nanostructure is removed, leaving the infiltrated material inside the nanostructure. This burning out step further increases the surface area per volume, because the area occupied by the nanotubes scaffold becomes empty and porous.

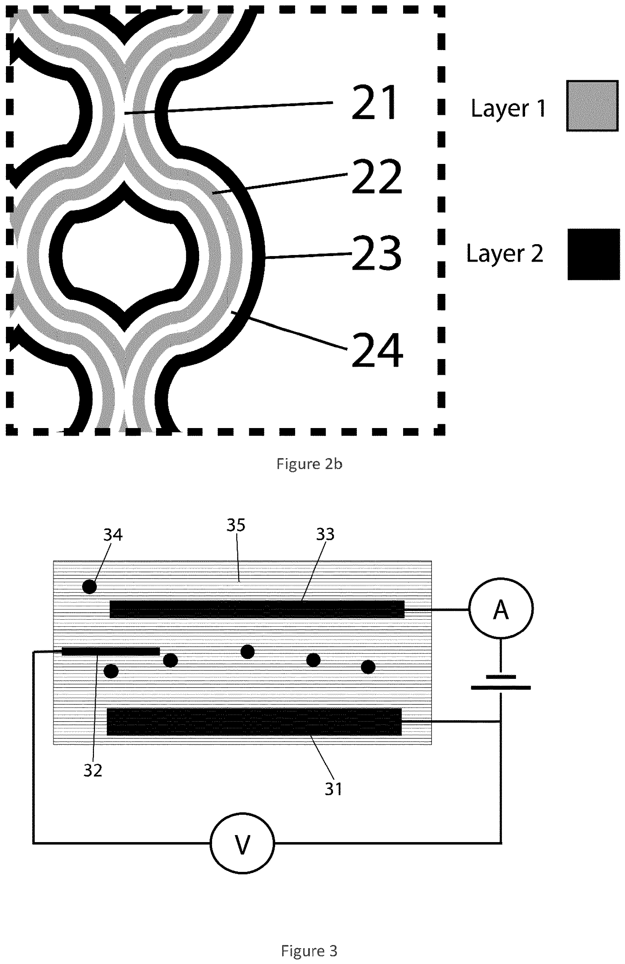

In another embodiment, several layers of different infiltration materials can be applied to generate hybrid structure during the partial infiltration. The figure 2 shows a two-layers nested nanostructure in a cross-sectional view. The nanostructure is with two super imposed infiltration layers, which is realized in the following manner. Firstly, a matrix of vertically aligned carbon nanotubes (VACNT) is generated. Secondly, a first infiltration layer 1 is coated on the VACNT. Thirdly, a sacrificial layer (e.g. carbon) is coated on the first infiltration layer. Fourthly, a second infiltration layer 2 is coated on the sacrificial layer. Fifthly, the VACNT and the sacrificial layer of carbon are removed. For example, for the sacrificial layer of carbon, both the VACNT and the sacrificial layer can be removed together by burning using oxygen or water at high temperature (>500 C for $O_2$, >700 C for $H_2O$).

Since the added infiltration layers might block the access to the internal pores of the nanostructure, it could be necessary in certain embodiments to etch or to polish either the top or bottom of the nanostructure for a certain depth in order to expose the internal pores to the environment. The etched or polished side will not be the side of the solid base that is to be adhered/attached to the oscillator.

Figures 2a and 2b show cross-sectional views of a nested nanostructure with two layers of superimposed partial infiltration coatings. Inside layer 1 of the partial infiltration coating (22), there are pores (21) left behind after the CNTs being removed. In between layer 1 (22) and layer 2 (23), there are pores (24) left behind after the sacrificial carbon layer being removed. Both layer 1 (22) and layer 2 (23) have interior and exterior surfaces that contribute to the total surface area. The top and external sides of the nanostructure are etched, e.g. by plasma, to expose the inner layers 1 and 2. The etched sides and top allow the water vapor to access the inner layers 1 and 2 and allow electrolyte/ions to access the interior of the final electrode.

It is also possible to add more than two layers of infiltration material interspersed with sacrificial layers that can be removed by burning or etching.

The superimposing of multi-layer partially infiltrated coatings is a very important technique, which merits detailed descriptions. The main concept is that a nanostructure (e.g. a VACNT forest) is coated with multiple layers of two different materials. One material is the structural material that will comprise the final electrode. The other material is a sacrificial material (or solid electrolyte in the case of a gas sensor). When the sacrificial material is removed, a multi-layer superimposed nanostructure made of the structural material remains. Each nanostructure has more than one layer of surfaces that contribute to the total surface area of the electrode. This increased surface area of the electrode increases the sensitivity of the electrochemical sensor.

It is also possible to separate the layers using a solid electrolyte instead of a sacrificial material. The electrolyte would serve as a path for ion conduction and would not need to be removed. These structures would be near fully solid and mechanically rigid. This is the more likely configuration for gas sensors.

In the following paragraphs, some concrete fabrication examples are given. However, there are multiple materials and depositions systems, which are not limited to the ones given in the example, that work well to make the electrodes.

Carbon is used as the structural material and $SiO_2$ is used as the sacrificial layer. The carbon could be deposited by atomic layer deposition (ALD), molecular layer deposition (MLD), or chemical vapor deposition (CVD). The $SiO_2$ could be deposited by ALD or CVD. Alternating layers of carbon and $SiO_2$ are coated onto a VACNT forest by consecutive partial infiltrations alternating between carbon and SiO2 depositions. Due to the conformal nature of the coating, only the last applied layer is exposed. To expose all the layers, the electrode is etched by an $O_2 + SF_6$ plasma. The plasma etch exposes the layers on the top and sides of the electrode, but does not change the interior structure because the plasma does not penetrate far into the forest. Once the layers are exposed. The $SiO_2$ layer is removed by hf vapor etching. The remaining electrode has two complex surfaces for each carbon layer (expect the first). The carbon can be annealed to change the crystal structure and functionalized to change the hydrophobicity or add analyte selectivity.

There are several alternative implementations of this concept that would also work. For example, a structural layer of ALD tungsten or another ALD compatible metal and a sacrificial layer of ALD $SiO_2$ or another oxide that can be etched by HF vapor and a $SF_6$ plasma. Another potential would be to use a carbon sacrificial layer with a metal structural layer and remove the carbon with hydrogen gas with a high water vapor content at 700-800°C. High melting point metals (e.g. titanium, tungsten) are better suited for the process because they are less mobile at 700-800°C. This process would also remove the VACNTs provide and additional interior surface. The down side of using this method is the oxidation/reduction electrochemical reaction that these metals can undergo which are undesirable in some applications.

This multilayer process can dramatically increase the surface area of the device and could be applied to other nanostructures (e.g. mesoporous silica or activated carbon) as well. Surface area per volume is generally reported in $\dfrac{m^2}{cm^3}$. For a matrix of VACNT as grown, it is generally around $5 \dfrac{m^2}{cm^3}$. The infiltration increases it to around $25 \dfrac{m^2}{cm^3}$. Removing the nanotubes by burning out process could further increase it to around $30 \dfrac{m^2}{cm^3}$. The multilayer process could increase it to around $300 \dfrac{m^2}{cm^3}$ for a second layer of 3nm structural material and sacrificial material, to around $450 \dfrac{m^2}{cm^3}$ for three layers of 2nm structural and sacrificial material structure, and up to around $900 \dfrac{m^2}{cm^3}$ for seven total coating layers of 1nm structural and sacrificial material structure.

Conclusion, it is possible to influence the following parameters of the nanostructure:

- Pitch between the nanotubes (intervals between nanotubes in a two-dimensional plane),
- Growth height of the nanotubes, and therefore contact and detection surface,
- Degree of partial infiltration between the tubes,
- chemical functionalization of surfaces (deposits of other elements, structuring, activation, etc.),
- multi-layered composition in a more elaborate form, mono.

The advantages are following:
Increased resolution and sensitivity because of the increased surface area.

The obvious advantage of the superimposed multi-layer nanostructure resulting from the infiltration and burning process is the high surface area per volume value, which is dramatically increased as explained in the fabrication steps. Thus, a high sensitivity and increased surface reactivity of the electrode are achieved.

Material flexibility

Infiltration of the nanotubes instead of using the native nanotubes opens the possibility to use many other types of materials without sacrificing the superior growth properties of the vertically aligned carbon nanotubes (VACNTs), which can grow orders of magnitude higher and denser than other nanotubes. There are many applications for which carbon and particularly CNTs are not well suited, for example, sensing in a water based medium. Carbon are hydrophobic, which prevents water-based mediums from fully penetrating the interior of the nanostructure. Alternatively, a conducting oxide like titanium oxide could be a good choice for the electrode of a sensor designed to operate in water.

Ease of manufacturing

In the state of the art, most nanostructures, particularly vertically aligned forests, are not locked to be rigid, which leads to many difficulties in manipulation. This is why, in most instances, nanostructures are grown directly onto the surface of the final device, which complicates manufacturing and decreases throughput. The manufacturing is complicated, because due to the growth compatibility, only very limited choices of material can be used to make the device, on which the nanostructure grows directly. In addition, since the device itself occupies a large part of space in the growth reactor, the available space for growing the nanostructure is limited. By locking the nanostructures rigid, it is easy to grow the nanostructures in a high-density array on an ideal substrate, and to transfer them to the final destined device.

Specificity of Electrochemical sensors

The partially infiltrated nanostructure electrode can be used to detect ionic or non-ionic analytes. When detecting ions, the surface properties are less important. When detecting species that are not ionic, surface functionalization that can trap the species are usually needed. The bonding of the analytes to the functionalized surface changes the potential or impedance of the electrodes.

Carbon is a good example for a conductive infiltration material, while graphite is a common choice for electrode. For a graphite electrode with carbon infiltrated nanostructure, it is necessary to change the surface from hydrophobic to hydrophilic (to be used in water) by using an ozone or a remote plasma treatment, so that water will penetrate into the electrode and bubbles will not get trapped inside.

Generally, it is best that the infiltration material is conductive so that the conductivity of the electrode is improved. However, there might be certain applications using impedometry where the infiltration material could be an insulating exterior surrounding a conductive core of CNTs.

Additional treatment is necessary for the surface for measuring the electrical signals in two instances:

1. If selective bonding cites are needed to trap the analyte on the surface. In this case, some form of functionalization is required to realize the selective trap. For example, if the target analyte is a pathogen, the surface of the electrode could be functionalized with corresponding antibodies.

2. If the electrode material is hydrophobic it needs to be functionalized so that it is hydrophilic. This allows water to better penetrate into the electrode. This is not an absolute requirement, but will likely increase performance.

The purpose of a current collector is to provide lateral conductivity across the electrode. For certain embodiment, it is necessary to add the current collector. For example, if the electrode is electrically connected at a single point, it is important that the regions far from the connection and close to the connection be at the same potential. A current collector basically guarantees that. However, there are several instances in which it is not necessary to have the current collector. For example, if the electrode is small or if the partial infiltration material is sufficiently conductive.

In the following paragraphs, the application of electrode based on the partially infiltrated nanostructure is illustrated with an example of voltammetry and an example of impedance spectroscopy.

Voltammetry

The figure 3 shows a voltammetry. The voltammetry is a category of electroanalytical methods used in analytical chemistry. In voltammetry, information about an analyte is obtained by measuring the current as a function of applied potential I = f(E), which is called voltammgrams. The simplest case is a linear sweep voltammetry. As potential is applied, electrolysis of analyte begins and current rises until it reaches a limiting current, which magnitude is directly proportional to activity or concentration of analyte. The electrochemical sensor of voltammetry consists of three kinds of electrodes: a working electrode 31, a reference electrode 32 and a counter electrode 33. The working electrode, which contacts the analyte 34 in the medium 35, applies a potential scanning to drive a nonspontaneous redox reaction and facilitates the transfer of charge to and from the analyte. The counter electrode serves to pass all the current needed to balance the current observed at the working electrode. The reference electrode is to act as reference in measuring and controlling the working electrode's potential and at no point does it pass any current. In the present invention, a nanostructure with superimposed multi-layers of partial infiltration coatings is used as the working electrode. The working electrodes can be ion selective through the use of nanostructure with different functionalization. These ion-selective functionalized surfaces allow the targeted detection of a single ion in a mixture. Like the standard voltammetry, the reference electrode can be made of SCE, Ag, AgCl, while the counter electrode can be made of Pt wire.

The shape of the resulting current/voltage curve is influenced by analytes in the medium or adsorbed onto the working electrode.

Electrochemical impedance spectroscopy (EIS)

The electrochemical impedance spectroscopy (EIS) is a highly sensitive characterization technique used to establish the electrical response of chemical systems in a nondestructive manner. EIS is interesting for analytical electrochemistry, because molecules can be detected without a redox active marker. EIS systems characterize the time response of chemical systems using low amplitude alternating current (AC) voltage over a range of frequencies. The impedance is the ratio of voltage and current for AC systems. The wave nature of alternating current voltage makes it necessary to define the impedance with two parameters. One is the impedance amplitude Z and the other one is the phase shift Φ.

Figure 1 shows an electrochemical sensor with nanostructure electrodes in electrochemical impedance spectroscopy (EIS) method. The analytes (41) are dissolved in the medium (42). One bottom electrode (43) is connected with a potential supplier (44), while an upper electrode (45) is connected with a transimpedance amplifier (46). The other input of the transimpedance amplifier (46) is grounded. When the potential supplier (44) applies an oscillating potential with a fixed frequency on the bottom electrode (43), a current passing through the upper electrode (45) is measured by the transimpedance amplifier (46), which generates a voltage output (47), whose amplitude is related to the impedance of the medium at that fixed frequency of applied potential.

As the frequency of the applied potential varies, the impedance of the medium varies in its amplitude and phase shift. This is because different analytes in the medium or absorbed onto the electrode change the impedances at certain frequencies, which in turn alters the outputs at those frequencies. This characteristic gives a key advantage of EIS over other detection methods, which allows the user to distinguish different types of analytes or chemical reactions depending on impedance amplitude variation and phase shift at different applied potential frequencies.

## Claims

1. Electrode for an electrochemical sensor used in detecting the presence of one or more molecules of interest in a media:

   - Wherein the electrode contains a three-dimensional (3D) nanostructure,
   - Wherein the 3D nanostructure forms a rigid structure with more than one layer of superimposed partial infiltration coatings to avoid the structural deformation of the 3D nanostructure by preventing the structure conglomeration in the media.

2. Electrode of claim 1, wherein the 3D nanostructure has a surface area per volume of at least 50 $m^2/cm^3$ by the superimposed multi-layers of partial infiltration coatings.

3. Electrode of claim 1, wherein the 3D nanostructure is made from a matrix of nanotubes or nanorods realized in the material among carbon, boron nitride, silicon.

4. Electrode of claim 1, wherein the 3D nanostructure is made from a vertically aligned carbon nanotubes arrays (VANTAs).

5. Electrode of claim 1, wherein the partial infiltration coating is realized by partially infiltrating the 3D nanostructure with a material selected among ceramics(Si), especially metal oxides (TiO2), polymers, metals (Ni), other allotropic forms of carbon.

6. Electrode of claim 1, wherein 4% - 80% of the nanostructure's total internal volume is infiltrated.

7. Electrode of claim 1, wherein the 3D nanostructure has a controllable porosity by controlling the diameter of the nanotubes/nanorodes, the pitch between the nanotubes/nanorodes, the thickness of the infiltration coatings.

8. Electrode of claim 1, wherein the nanostructure is grown directly and fixed permanently on the surface of a chip.

9. Electrode of claim 1, wherein the nanostructure is fixed onto the surface of a chip by a technique selected from chemical bonding, vacuum disposition, origamic pop-up folding.

10. Electrode of claim 1, wherein the target molecules are proteins, disease marker, aroma compounds, explosives pollutants, glucose, alcohols, or ions.

11. Electrochemical sensor, wherein the sensor comprises a multiply of electrodes of any of the precedent the claims.

12. Electrochemical sensor of precedent claim, wherein the sensor comprises a voltammetry, an amperemeter, or an electrochemical impedance spectrometer.

13. An electrochemical method for detecting the presence of one or more molecules of interest in a media, wherein the method uses an electrochemical sensor of the precedent claim.

14. Method for fabricating an electrode according to claim 1 comprises the following steps:

    - Generating a nanomatrix of nanotubes or nanorods realized in the material among carbon, boron nitride, silicon;
    - Superimposing multi-layers of partial infiltration coatings by partially infiltrating the nanomatrix of nanotubes or nanorods with materials selected among ceramics (Si), especially metal oxides (TiO2), polymers, metals (Ni), other allotropic forms of carbon,
    - Removing the nanomatrix of nanotubes or nanorods.

15. Method according to the precedent method, wherein a part of the superimposed multi-layers as sacrificial layers are removed, the remaining layers constitute the structural material of the electrode.

Figure 1

Nanostructure

Infiltration
Direction

Electrochemically
Active Infiltration
Material

Layer 1

Layer 2

Figure 2a

Figure 2b

Layer 1

Layer 2

Figure 3

Figure 4

Europäisches
Patentamt

European
Patent Office

Office européen
des brevets

# EUROPEAN SEARCH REPORT

Application Number

EP 21 15 8430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BROWNLEE BENJAMIN J. ET AL: "Electrochemical Glucose Sensors Enhanced by Methyl Viologen and Vertically Aligned Carbon Nanotube Channels", APPLIED MATERIALS & INTERFACES, vol. 10, no. 34, 29 August 2018 (2018-08-29), pages 28351-28360, XP055826500, US ISSN: 1944-8244, DOI: 10.1021/acsami.8b08997 * the whole document * | 1-8, 10-13 | INV. G01N27/30 H01L21/02 |
| X | WO 2020/214695 A2 (CALIFORNIA INST OF TECHN [US]; SIENZA ENERGY INC [US]) 22 October 2020 (2020-10-22) * abstract * * figures 18A-18C, 25 * * paragraphs [0008], [0061], [0100] - [0109] * | 1,5,8 | |
| X | WO 2004/111319 A2 (UNIV CALIFORNIA [US]; YANG PEIDONG [US] ET AL.) 23 December 2004 (2004-12-23) * abstract * * figures 1A, 2A, 2B, 17 * * paragraphs [0019], [0032], [0033], [0068], [0069], [0115], [0116], [0117] * | 1,14,15 | TECHNICAL FIELDS SEARCHED (IPC) G01N H01L H01G B82Y |
| X | US 2012/321961 A1 (YUSHIN GLEB NIKOLAYEVICH [US] ET AL) 20 December 2012 (2012-12-20) * abstract * * figures 1-3 * * paragraphs [0008], [0033], [0041], [0042], [0043], [0050] * | 1,3,4,9 | |

The present search report has been drawn up for all claims

| Place of search | Date of completion of the search | Examiner |
|---|---|---|
| Munich | 21 July 2021 | Ruchaud, Nicolas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 21 15 8430

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2021

| Patent document cited in search report | | Publication date | Patent family member(s) | | Publication date |
|---|---|---|---|---|---|
| WO 2020214695 | A2 | 22-10-2020 | NONE | | |
| WO 2004111319 | A2 | 23-12-2004 | AU | 2003304214 A1 | 04-01-2005 |
| | | | CA | 2509257 A1 | 23-12-2004 |
| | | | EP | 1583858 A2 | 12-10-2005 |
| | | | JP | 2006512218 A | 13-04-2006 |
| | | | KR | 20050085437 A | 29-08-2005 |
| | | | WO | 2004111319 A2 | 23-12-2004 |
| US 2012321961 | A1 | 20-12-2012 | US | 2012321961 A1 | 20-12-2012 |
| | | | US | 2016315323 A1 | 27-10-2016 |
| | | | US | 2017125817 A1 | 04-05-2017 |
| | | | US | 2018145331 A1 | 24-05-2018 |

EPO FORM P0459

For more details about this annex : see Official Journal of the European Patent Office, No. 12/82

**EP 4 047 359 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060096870 A